# DEMANDE DE BREVET EUROPEEN

(11) **EP 0 913 874 A1**
(43) Date de publication de la demande: **06.05.1999**
(21) Numéro de dépôt: 98402500.7
(22) Date de dépôt: 08.10.1998
(51) Int. Cl.: H01M 2/02, H01M 10/04, H01M 2/10, H01M 2/06, H01M 2/26

(54) **Accumulateur étanche à enveloppe multicouche**

(30) Priorité: 16.10.1997 FR 9712957; 27.11.1997 FR 9714909
(71) Demandeur: ALCATEL, 75008 Paris (FR)
(72) Inventeur: Rigobert, Gérard, 86000 Poitiers (FR); Souliac, Laurent, 86280 Saint Benoit (FR)
(74) Mandataire: Laroche, Danièle

(57) **Abrégé**

Accumulateur (1) étanche à électrolyte organique comprenant :
* un faisceau (12) spiralé d'électrodes, comportant au moins une alternance d'électrode négative (14), de séparateur (15, 19) et d'électrode positive (11),
ledit accumulateur étant caractérisé en ce qu'il comporte :
* une enceinte composée d'un couvercle (3a) et d'un fond (3b) liés de manière étanche à une enveloppe latérale (2), ladite enveloppe enserrant ledit faisceau, ledit couvercle et ledit fond comprenant chacun une borne de sortie de courant (9a, 9b), et
* un mandrin central (10), autour duquel est spiralé le faisceau (12) d'électrodes, et aux extrémités duquel sont fixés le fond (3b) et le couvercle (3a),
et en ce que l'enveloppe enserrant ledit faisceau est constituée d'un matériau multicouche mixte métal - plastique d'épaisseur inférieure à 0,5 mm.

Module de tels accumulateurs et batterie comprenant au moins un tel module. Utilisation en tant que batterie de véhicule électrique.

## Description

La présente invention concerne un accumulateur étanche comprenant une enveloppe multicouche. Plus particulièrement, l'invention concerne un tel accumulateur comprenant un faisceau spiralé d'électrodes.

Dans un mode de réalisation connu, les accumulateurs étanches comprennent un faisceau électrochimique comportant au moins une alternance d'électrode négative, de séparateur et d'électrode positive, et une enceinte composée d'un couvercle, d'un fond et d'une enveloppe, ladite enveloppe enserrant ledit faisceau, et ledit couvercle et ledit fond comprenant chacun une borne de sortie de courant.

Les accumulateurs fonctionnant avec un électrolyte organique doivent être logés dans une enceinte présentant une étanchéité suffisante. En effet, ladite enveloppe doit empêcher les éléments extérieurs, tels que l'humidité ou l'oxygène de l'air, principalement l'humidité, de pénétrer au sein de l'accumulateur et d'entrer ainsi en contact avec le faisceau électrochimique. De plus, ladite enceinte doit empêcher un passage de l'électrolyte vers l'extérieur de l'accumulateur. Afin de ne pas alourdir inutilement l'accumulateur, la masse de l'ensemble des constituants de l'enceinte doit être aussi faible que possible. Pour des accumulateurs de forte capacité, afin de ne pas prendre trop de volume sur le volume utile du faisceau électrochimique, l'épaisseur de chacun des constituants de l'enceinte doit être aussi faible que possible. Pour être techniquement réalisables, les enceintes en matériau métallique sont d'épaisseur importante, par exemple de 0,3 à 1 mm, et donc de poids important. Les enceintes en matériau plastique, elles, sont plus légères mais posent des problèmes d'étanchéité, principalement d'entrée d'humidité au sein de l'accumulateur. Ceci leur impose d'être plus épaisses, par exemple d'au moins 1 cm d'épaisseur.

D'autre part, la demande de brevet JP-A-63.181.272 décrit un accumulateur étanche comprenant une enceinte en un seul tenant consistant en un film externe en métal léger, par exemple d'aluminium, et un film interne en résine, par exemple de polyéthylène, la jonction hermétique avec les électrodes étant assurée par de la résine époxy. De tels accumulateurs posent néanmoins le problème d'une tenue mécanique insuffisante de l'accumulateur.

Ainsi le problème qui se pose est de réaliser simultanément un accumulateur étanche, aussi bien de l'intérieur de l'accumulateur vers l'extérieur que de l'extérieur de l'accumulateur vers l'intérieur, qui possède une tenue mécanique suffisante pour assurer une bonne durée de vie dudit accumulateur, et dont l'enceinte soit relativement légère et relativement peu épaisse. L'accumulateur selon l'invention résout le problème posé, en ce qu'il permet par la combinaison de deux moyens, à savoir une enveloppe en matériau multicouche et un mandrin central de maintien, d'assurer l'étanchéité, la tenue mécanique, le faible volume occupé par l'enceinte et la légèreté de l'ensemble.

La présente invention concerne un accumulateur étanche à électrolyte organique comprenant :
* un faisceau spiralé d'électrodes, comportant au moins une alternance d'électrode négative, de séparateur et d'électrode positive,
ledit accumulateur étant caractérisé en ce qu'il comporte :
* une enceinte composée d'un couvercle et d'un fond liés de manière étanche à une enveloppe latérale enserrant ledit faisceau, ledit couvercle et ledit fond comprenant chacun une borne de sortie de courant, et
* un mandrin central, autour duquel est spiralé le faisceau d'électrodes, et aux extrémités duquel sont fixés le fond et le couvercle,
et en ce que l'enveloppe enserrant ledit faisceau est constituée d'un matériau multicouche mixte métal - plastique d'épaisseur inférieure à 0,5 mm.

Dans une forme de réalisation, ledit matériau multicouche est bicouche.

L'épaisseur du matériau multicouche est de préférence comprise entre 0,1 et 0,5 mm.

Un des avantages de la présence du mandrin central est de permettre une bonne tenue mécanique de l'accumulateur. De plus l'utilisation d'un tel matériau multicouche pour l'enveloppe de l'accumulateur permet d'améliorer ledit accumulateur tant au niveau du coût qu'au niveau du poids de l'accumulateur et du volume occupé par l'enceinte de l'accumulateur.

Un autre avantage de l'utilisation d'un tel matériau multicouche est la possibilité que l'enveloppe se détruise elle-même en cas d'anomalie de fonctionnement, généralement en cas d'élévation de température (plus de 150°C par exemple) ou d'augmentation de pression interne, assurant ainsi une meilleure sécurité de l'utilisateur.

Enfin un avantage supplémentaire de l'utilisation d'un tel matériau multicouche est la possibilité d'assurer l'étanchéité entre le fond (respectivement le couvercle) et l'enveloppe par thermosoudure, et non plus seulement par collage avec une résine époxy, ce qui confère une meilleure efficacité et une meilleure maniabilité lors du procédé de fabrication d'un tel accumulateur.

L'invention concerne aussi un module d'accumulateurs tels que décrits précédemment, ledit module comportant un bac monobloc comprenant des alvéoles logeant chacune un tel accumulateur, lesdits accumulateurs étant installés en série et/ou en parallèle, typiquement six alvéoles fonctionnant trois en série et deux en parallèle ou fonctionnant deux en série et trois en parallèle. L'invention concerne enfin une batterie comportant au moins un module tel que décrit précédemment, typiquement trente modules fonctionnant en série, ainsi qu'un véhicule comprenant au moins un moyen de propulsion et alimenté par une source d'énergie comprenant au moins une telle batterie. L'invention s'applique ainsi en particulier à une utilisation de la batterie décrite précédemment en tant que batterie de véhicule électrique.

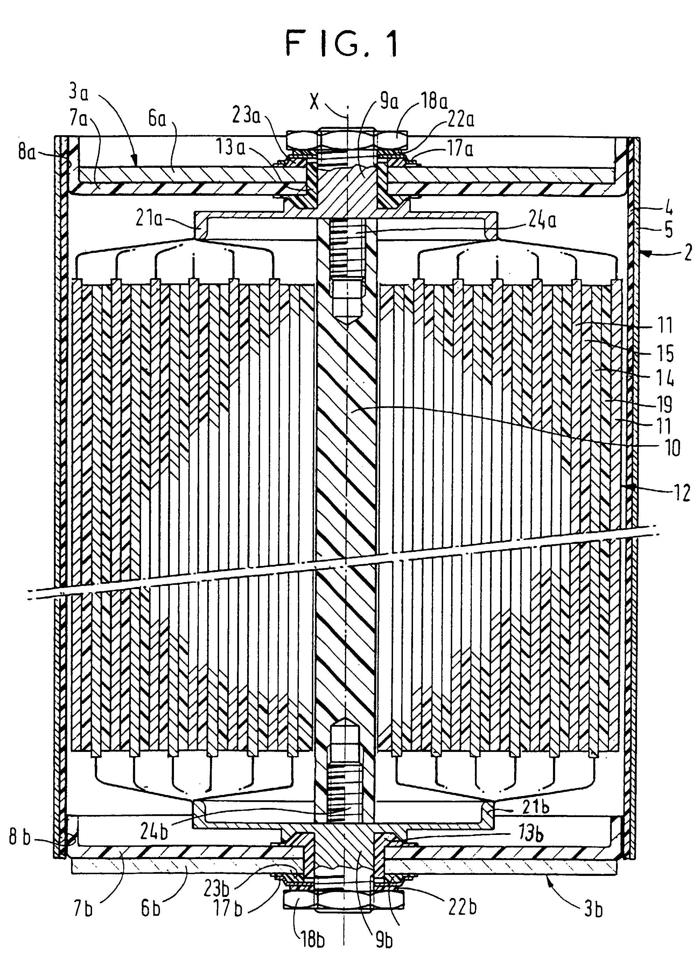

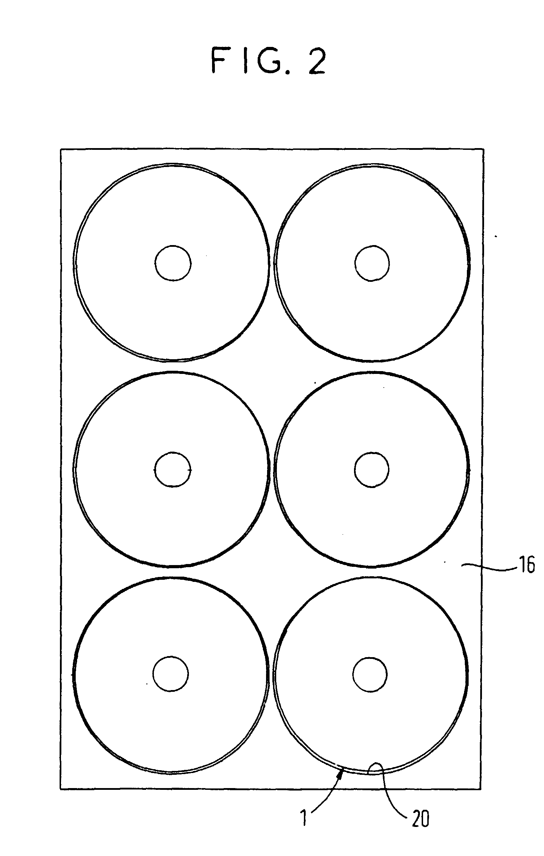

L'invention sera mieux comprise et d'autres avantages et particularités apparaîtront à la lecture de la description qui va suivre, donnée à titre non limitatif, par référence aux dessins dans lesquels la figure 1 est une représentation schématique en coupe longitudinale d'un accumulateur selon l'invention et la figure 2 est une représentation schématique extérieure d'un module constitué d'un bac monobloc selon l'invention.

L'accumulateur 1 comprend un faisceau électrochimique 12 comportant une électrode de polarité positive 11, un séparateur 15, une électrode de polarité négative 14 et un séparateur 19, ledit faisceau étant enroulé en spirale autour d'un mandrin central 10 selon l'axe X.

L'accumulateur 1 possède un couvercle 3a (respectivement un fond 3b), à proximité de la borne de sortie de courant 9a (respectivement 9b), ainsi qu'une enveloppe latérale 2. L'enveloppe 2, le fond 3b et le couvercle 3a forment l'enceinte de l'accumulateur 1 et sont liés de manière étanche. Le couvercle 3a (respectivement le fond 3b) est fixé sur l'extrémité supérieure du mandrin central 10.

L'enveloppe 2 de l'accumulateur 1 possède une symétrie de révolution. Elle est sensiblement cylindrique.

L'enveloppe 2 est formée d'un film d'épaisseur inférieure à 0,5 mm constitué d'un matériau multicouche, qui est bicouche et qui peut être formé par colaminage, métal 5 - plastique 4. Le métal 5 peut être de l'aluminium ou de l'inox. Le plastique 4 peut être du polypropylène ou du polyéthylène. L'épaisseur de la couche métallique elle-même dans ledit matériau est par exemple au plus d'environ 0,1 mm.

Le couvercle 3a (respectivement le fond 3b) est en matériau multicouche, qui est bicouche et qui peut être formé par colaminage, métal 6a - plastique 7a (respectivement métal 6b - plastique 7b). Le métal 6a (respectivement 6b) peut être de l'aluminium ou de l'inox. Le plastique 7a (respectivement 7b) peut être du polypropylène ou du polyéthylène. Le couvercle 3a (respectivement le fond 3b) est d'épaisseur généralement comprise entre 0,5 et 3 mm. L'épaisseur de la couche métallique elle-même dans ledit matériau est par exemple au plus d'environ 0,1 mm.

L'enveloppe 2 est réalisée par enroulement de la feuille en une structure cylindrique, puis par maintien du cylindre ainsi obtenu, par collage ou de préférence par thermosoudure le long d'un axe parallèle à l'axe longitudinal, avec un recouvrement des bords. Elle peut aussi être réalisée par enroulement de ladite feuille autour du faisceau cylindrique, puis par maintien du cylindre ainsi obtenu, avec un recouvrement des bords.

Dans le cas représenté sur la figure 1, l'assemblage du couvercle 3a (respectivement du fond 3b) et de l'enveloppe 2 est assurée par une thermosoudure circulaire 8a (respectivement 8b), permettant d'obtenir l'étanchéité. Ledit assemblage peut aussi être réalisé par tout moyen connu de l'homme du métier tel qu'un collage. De façon à faciliter la thermosoudure, et donc la maniabilité de l'opération de fabrication de l'accumulateur, l'accumulateur selon l'invention représenté sur la figure 1 comprend l'orientation suivante pour les matériaux bicouches : la partie métallique 5 de l'enveloppe 2 est située à l'extérieur dudit accumulateur et la partie métallique 6a du couvercle 3a (respectivement 6b du fond 3b) est située à l'extérieur dudit accumulateur. Mais toute combinaison est a priori possible dans le cas de la présence d'un matériau multicouches- dans l'enveloppe et dans le couvercle (respectivement le fond), l'intérieur du couvercle (respectivement du fond) ou de l'enveloppe étant composé d'un matériau métallique ou d'un matériau plastique.

La borne de sortie 9a (respectivement 9b) permet la collecte du courant des électrodes de polarité positive 11 (respectivement négative 14) par la pièce de connexion borne de sortie - électrodes 21a (respectivement 21b). L'isolation de l'ensemble est assurée par un joint d'étanchéité 13a (respectivement 13b) qui prend appui entre le mandrin 10 et le couvercle 3a (respectivement 3b), sur la pièce de connexion 21a (respectivement 21b). La pièce 17a (respectivement 17b) est une coupelle de serrage qui vient s'insérer sur le joint 23a (respectivement 23b) et sur lequel on place une rondelle en plastique 22a (respectivement 22b). Le tout est maintenu par la vis 24a (respectivement 24b) et serré par l'écrou de serrage 18a (respectivement 18b).

L'accumulateur représenté sur la figure 1 a été fabriqué de la façon suivante : le faisceau électrochimique 12 est enroulé sur le mandrin 10, puis sont mises en place les connexions d'électrodes 21a et 21b ; le joint 13b est installé sur une extrémité du mandrin ; puis le fond 3b est installé par dessus ce joint 13b ; enfin le serrage a lieu avec la mise en place des pièces 24b, 23b, 17b, 22b et 18b. Le faisceau est alors inséré dans l'enveloppe 2, un moyen de maintien par exemple sous vide permettant d'écarter les parois de l'enveloppe 2 pendant l'introduction du faisceau 12. Le fond est alors thermosoudé par la thermosoudure 8b. Puis le couvercle est mis en place par insertion des pièces 13a,3a, 24a, 23a, 17a, 22a et 18a. La thermosoudure 8a est réalisée en dernier lieu.

La figure 2 est une représentation schématique extérieure d'un module constitué d'un bac monobloc 16 selon l'invention comprenant six alvéoles 20 comprenant chacune un accumulateur 1 selon la figure 1. Le maintien mécanique de l'accumulateur 1 ainsi inséré dans une alvéole dudit bloc est aussi assuré par les parois de l'alvéole 20 le contenant. Le faible encombrement de l'enveloppe 2 permet d'avoir dans chaque alvéole un grande proportion (en volume) de volume utile du faisceau électrochimique.

L'enveloppe 2 représentée sur la figure 1 est sensiblement cylindrique. Elle peut aussi être prismatique.

Un autre mode de réalisation est tel que le couvercle 3a (respectivement le fond 3b) est en matériau métallique d'épaisseur généralement comprise entre 0,5 et 3 mm (non représenté).

L'accumulateur selon l'invention fonctionne par exemple avec un électrolyte organique liquide, mais l'électrolyte peut aussi être un polymère solide. Le couple électrochimique mis en jeu est généralement un couple lithium - ion rechargeable, mais l'invention peut être étendue à tout accumulateur primaire ou secondaire au lithium métal.

## Revendications

1. Accumulateur (1) étanche à électrolyte organique comprenant :
* un faisceau (12) spiralé d'électrodes, comportant au moins une alternance d'électrode négative (14), de séparateur (15, 19) et d'électrode positive (11),
ledit accumulateur étant caractérisé en ce qu'il comporte :
* une enceinte composée d'un couvercle (3a) et d'un fond (3b) liés de manière étanche à une enveloppe latérale (2) enserrant ledit faisceau, ledit couvercle et ledit fond comprenant chacun une borne de sortie de courant (9a, 9b), et
* un mandrin central (10), autour duquel est spiralé le faisceau (12) d'électrodes, et aux extrémités duquel sont fixés le fond (3b) et le couvercle (3a),
et en ce que l'enveloppe (2) enserrant ledit faisceau est constituée d'un matériau multicouche mixte métal - plastique d'épaisseur inférieure à 0,5 mm.

2. Accumulateur selon la revendication 1 tel que l'enveloppe enserrant ledit faisceau est constituée d'un matériau multicouche mixte métal - plastique d'épaisseur comprise entre 0,1 et 0,5 mm.

3. Accumulateur selon l'une des revendications 1 ou 2 tel que ledit matériau multicouche de l'enveloppe enserrant le faisceau est bicouche (4, 5).

4. Accumulateur selon l'une des revendications 1 à 3 tel que l'une au moins des pièces suivantes : le couvercle (3a) ou le fond (3b), est constituée d'un matériau multicouche mixte métal - plastique d'épaisseur comprise entre 0,5 et 3 mm.

5. Accumulateur selon la revendication 4 tel que ladite pièce et l'enveloppe ont été assemblées par thermosoudure (8a, 8b).

6. Accumulateur selon l'une des revendications 4 ou 5 tel que le matériau multicouche de ladite pièce est bicouche (6a - 7a, 6b - 7b).

7. Accumulateur selon l'une des revendications 1 à 3 tel que l'une au moins des pièces suivantes : le couvercle ou le fond, est constituée d'un matériau métallique d'épaisseur comprise entre 0,5 et 3 mm.

8. Module d'accumulateurs selon l'une des revendications 1 à 7 comportant un bac monobloc (16) comprenant des alvéoles (20) logeant chacune un tel accumulateur (1), lesdits accumulateurs étant installés en série et/ou en parallèle.

9. Batterie comportant au moins un module selon la revendication 8.

10. Véhicule comprenant au moins un moyen de propulsion et alimenté par une source d'énergie comprenant au moins une batterie selon la revendication 9.
